# EUROPEAN PATENT SPECIFICATION

(11) **EP 2 501 539 B1**
(45) Date of publication and mention of the grant of the patent: **15.07.2015**
(21) Application number: 10774077.1
(22) Date of filing: 21.10.2010
(51) Int. Cl.: B29D 30/00, B29B 13/02, B60C 1/00, B29B 13/06, B29C 71/02, B29K 21/00

(54) **METHOD OF MAKING A PNEUMATIC INNERLINER**
VERFAHREN ZUR HERSTELLUNG EINER PNEUMATISCHEN INNENAUSKLEIDUNG
PROCÉDÉ DE RÉALISATION D'UN REVÊTEMENT INTERNE DE PNEUMATIQUE

(30) Priority: 19.11.2009 US 262594 P
(43) Date of publication of application: 26.09.2012
(73) Proprietor: ExxonMobil Chemical Patents Inc., Baytown, TX 77520 (US)
(72) Inventor: SHANNON, Porter, C., Seabrook TX 77586 (US); KEUNG, Jay, K., Humble TX 77346 (US)
(74) Representative: Mareschal, Anne
(86) International application number: PCT/US2010/053502
(87) International publication number: WO 2011/062724

(56) References cited:
- EP-A1- 0 172 057
- EP-A1- 1 995 275
- EP-A2- 0 451 425
- WO-A1-00/30838
- WO-A1-2007/070063
- WO-A1-2007/081323
- WO-A1-2008/004998
- "U.S. EPA HPV Challenge Program N-n-Butylbenzenesulphonamide BBSA", , 29 December 2003 (2003-12-29), pages 1-10, XP055140567, Merrifield, VA 22116 Retrieved from the Internet: URL:http://www.epa.gov/hpv/pubs/summaries/ nbtlbnzs/c15009.pdf [retrieved on 2014-09-16]

## Description

### FIELD OF THE INVENTION

The description relates to pneumatic innerliners for tires, and in particular to isobutylene -based dynamically vulcanized alloy innerliners and a process to prepare them for being formed into a component of a tire.

### BACKGROUND

The innerliners of pneumatic tires are critical for the overall performance of the tires. Using materials that have lower air permeability allows for gauging down the innerliner, which in turn improves fuel efficiency. Newer technology using Dynamically Vulcanized Alloys ("DVA") can allow for this. DVA blown film is a tire innerliner technology that is a dynamically vulcanized blend of an isobutylene-based elastomer and thermoplastic. An example of this technology is described by Tracey and Tsou in "Dynamically Vulcanized Alloy Innerliners" in RUBBER WORLD (September 1, 2007). In order to make the base material, from 10 to 20 percent by weight plasticizer must be added to the DVA.

While the plasticizer is essential for forming the DVA, it presents a problem in most subsequent steps for making a tire. The plasticizer smokes during the film forming process, it blooms to the surface of DVA film upon storage, it coats the curing equipment during the tire cure, and if it is not all removed from the innerliner, it degrades the innerliner's ability to hold pressure. What would be useful is a method for reducing or eliminating the plasticizer from DVAs before they are used to form the tire.

Some related publications include US 2008-0275187; US 2007-0106024; US 7,226,962; US 5,407,627; and WO 2009-048472.

EP 1 995 275 A1 discloses the removal of a plasticizer from an elastomer composition by heating the composition to evaporate the plasticizer.

### SUMMARY

This disclosure is directed to a method of preparing a continuous elastomeric length in the form of a sheet for a pneumatic innerliner as set out in claim 1. The heat-treated continuous elastomeric length or a laminate comprising the heat-treated continuous length may, for example be cut to form a pneumatic innerliner unit, and splicing the pneumatic innerliner unit to itself to form a pneumatic innerliner. The heat-treated continuous elastomeric length or a laminate comprising the heat-treated continuous length may be cut in the form of a sleeve, to form a pneumatic innerliner sleeve, and incorporated into a tire.

Desirably, the continuous elastomeric length comprises at least one elastomer, and furthermore, that or all of the elastomers are at least partially cured prior to the heating step in certain embodiments. The curing may be accomplished by dynamic vulcanization, and may be in the presence of an engineering resin and other components as described further below.

### Deleted

In any of the aspects of the invention herein, the air permeability of the heat-treated continuous elastomeric length is at least 10 or 30 or 50 or 100 or 200% lower than the air permeability of the continuous elastomeric length. Further, in any aspect of the disclosure, the level of plasticizer in the heat-treated continuous elastomeric length is at least 10 or 20 or 30 or 40 or 50 or 60 or 70 or 80 or 90% lower than the level of plasticizer in the continuous elastomeric length. The length and the compositions that make up the length can be described by numerous other descriptive aspects described further below.

The various descriptive elements and numerical ranges disclosed herein can be combined with other descriptive elements and numerical ranges to describe preferred embodiments of the compositions, innerliners, tires comprising innerliners and processes to treat and make such described herein; further, any upper numerical limit of an element can be combined with any lower numerical limit of the same element to describe preferred embodiments. In this regard, the phrase "within the range from X to Y" is intended to include within that range the "X" and "Y" values.

### BRIEF DESCRIPTION OF THE DRAWINGS

Figure 1 is a schematic diagram of a multi-zones oven embodiment of the process described herein, wherein the continuous length (sheet or sleeve) of elastomeric material is cycled through while being heated.
Figure 2 is a schematic diagram of a multi-oven embodiment of the process described herein, wherein the continuous length (sheet or sleeve) of elastomeric material is cycled through while being heated, showing optional extrusion coating die for placing a layer of another material on the heat-treated length to form a laminate.
Figure 3 is a graphical depiction of the data in Table 1.

### DETAILED DESCRIPTION

The present disclosure is directed to producing elastomeric sheets or sleeves that can be used as pneumatic innerliners, especially for tires. Desirably, the method is such that certain steps of cleaning the surface of such sheets and sleeves are absent, thus simplying and improving tire production. The cleaning steps, which can include removing surface plasticizers and/or process oils from the sheets or sleeves, are often necessary to render the sheets or sleeves workable into an innerliner. The cleaning removes the chance of undesirable smoke and gases forming during the heating stages of tire formation, and/or also allowed for more convenient splicing of the elastomeric sleeves or sheets to themselves or other tire components.

As used herein, the new numbering scheme for the Periodic Table Groups are as disclosed in HAWLEY'S CONDENSED CHEMICAL DICTIONARY (John Wiley & Sons, Inc. 1997). All molecular weights are weight average unless otherwise noted.

A "polymer" may be used to refer to homopolymers, copolymers, interpolymers, terpolymers, etc. Likewise, a copolymer may refer to a polymer comprising at least two monomers, optionally with other monomers. When a polymer is referred to as comprising a monomer, the monomer is present in the polymer in the polymerized form of the monomer or in the derivative form the monomer. However, for ease of reference the phrase "comprising the (respective) monomer" or the like is used as shorthand. Likewise, when catalyst components are described as comprising neutral stable forms of the components, it is well understood by one skilled in the art, that the active form of the component is the form that reacts with the monomers to produce polymers.

"Isoolefin" refers to any olefin monomer having two substitutions on the same carbon. An "isobutylene-based" polymer is a polymer comprising at least 20 wt%, by weight of the polymer, of isobutylene monomers.

"Elastomer" or elastomers as used herein, refers to any polymer or composition of polymers consistent with the ASTM D1566 definition.

"Alkyl" refers to a paraffinic hydrocarbon group which may be derived from an alkane by dropping one or more hydrogens from the formula, such as, for example, a methyl group (-CH₃), or an ethyl group (-CH₂CH₃), etc.

"Aryl" refers to a hydrocarbon group that forms a ring structure characteristic of aromatic compounds such as, for example, benzene, naphthalene, phenanthrene, anthracene, etc., and typically possess alternate double bonding ("unsaturation") within its structure. An aryl group is thus a group derived from an aromatic compound by dropping one or more hydrogens from the formula such as, for example, phenyl, or -C₆H₅.

"Substituted" or "functionalized" or "functional group" refers to at least one hydrogen group on a hydrocarbon moiety replaced by at least one substituent selected from, for example, halogen (chlorine, bromine, fluorine, or iodine), amino, nitro, sulfoxy (sulfonate or alkyl sulfonate), thiol, alkylthiol, and hydroxy; alkyl, straight or branched chain having 1 to 20 carbon atoms which includes methyl, ethyl, propyl, tert-butyl, isopropyl, isobutyl, etc.; alkoxy, straight or branched chain alkoxy having 1 to 20 carbon atoms, and includes, for example, methoxy, ethoxy, propoxy, isopropoxy, butoxy, isobutoxy, secondary butoxy, tertiary butoxy, pentyloxy, isopentyloxy, hexyloxy, heptyloxy, octyloxy, nonyloxy, and decyloxy; haloalkyl, which means straight or branched chain alkyl having 1 to 20 carbon atoms which is substituted by at least one halogen, and includes, for example, chloromethyl, bromomethyl, fluoromethyl, iodomethyl, etc.

The primary method of removing plasticizer from the elastomeric materials described herein is by exposure to heat to flash, evaporate, sublime, and/or oxidize the plasticizer from at least the surface of the elastomeric material to be used in an innerliner.

By "continuous" what is meant is that the length of material comprising an elastomer throughout is in a form such that it can be conveyed over or through a heating means and then cooled, whereas a part of the length is being heated while a previously heated portion is being cooled, and so forth, the heated and cooled portions being part of the same "length". The length is in the form of a continuous substantially flat sheet. An example of a continuous elastomeric length is a 20 inch wide sheet, 300 µm in average thickness that is 20 to 60 feet long. In one embodiment, the elastomer of the length is at least partially cured, and cured to its fullest extent in another embodiment, meaning that it is cured to the state that it will be cured at when incorporated into a pneumatic tire. In certain embodiments, the continuous elastomeric length has an average thickness within the range from 10 or 20 or 40 or 50 µm to 200 or 250 or 300 or 400 or 500 µm. The continuous elastomeric length can be formed by any suitable means, and in certain embodiments is formed by a casting or blowing process, preferably a blowing process.

In certain embodiments, the at least one surface of the continuous elastomeric length is heated to a temperature no higher than 15 or 10 or 5 or 0°C above the decomposition (or melting) point of the highest decomposition temperature (or melting) component in the length. In a more particular embodiment, the at least one surface of the continuous elastomeric length is heated to a temperature of less than 250 or 220 or 200 or 190 or 185 or 180 or 170 or 160°C. In yet a more particular embodiment, at least one surface of the continuous elastomeric length is heated to within the range from 60 or 80 or 100 or 120°C to 160 or 170 or 180 or 185 or 190 or 200 or 220 or 250°C. Desirably, these temperatures are measured to within ± 3 or 2°C, and correspond to the temperature of the atmosphere, stagnant or moving, surrounding the length, preferably within 30 cm (a foot) of a surface of the length.

In certain embodiments, the process can be characterized by the amount to which plasticizer is removed from the continuous elastomeric length. In one embodiment, the level of plasticizer in the heat-treated continuous elastomeric length is at least 10 or 20 or 30 or 40 or 50 or 60 or 70 or 80 or 90% lower than the level of plasticizer in the continuous elastomeric length. In another embodiment, air permeability of the heat-treated continuous elastomeric length is at least 10 or 20 or 40 or 80 or 100 or 200% lower than the permeability of the continuous elastomeric length.

Desirably, the permeation coefficient of the heat-treated continuous elastomeric length and/or the innerliners is less than 60 or 50 or 40 cc·mm/m²·day. In another embodiment, the heat-treated continuous elastomeric length and/or the innerliners have a permeability coefficient is less than 1.000 or 0.500 or 0.100 or 0.080 cc·mm/m²·day·mmHg.

The methods described herein may further comprise cutting the heat-treated continuous elastomeric length or laminate comprising the heat-treated continuous length to form a pneumatic innerliner unit, and splicing the pneumatic innerliner unit to itself to form a pneumatic innerliner, wherein a step of removing surface plasticizer is substantially absent. While such a step, performed after heating to remove plasticizer, may be convenient, in certain embodiments the continuous elastomeric length may be cut first, then the pneumatic innerliner units heated to form heat-treated pneumatic innerliners. These heat-treated pneumatic innerliners can then be used as components in tires.

In certain embodiments, a laminate is formed comprising the heat-treated continuous elastomeric length and some other material such as a thermoplastic, elastomer, adhesive, or combination thereof. In a particular embodiment a laminate is formed from the heat-treated elastomeric length and at least one layer of an adhesive material. The laminate may be formed from an already existing film of material, or can be formed by any other process such as by an extrusion coating process forming a layer of material directly upon the heat-treated length. An adhesive may comprise any polar-functionalized polymer, and in a particular embodiment is selected from the group consisting of styrenic copolymers, epoxidized styrenic copolymers, isobutylene-based copolymers, epoxidized isobutylene-based copolymers, maleated styrenic copolymers, maleated isobutylene-based copolymers, and combinations thereof. Polar functionalities add a degree of polarity to the polymer to which they are bound and include moieties such as, but not limited to, sulfates, phosphates, hydroxides, carboxylates, epoxides, acrylates, acetates, maleates, and the like. In certain embodiments, polar functionalities exclude halogens.

The step of heating the continuous elastomeric length can be accomplished by any desirable heating means capable of transferring heat to at least one surface, desirably all surfaced, of the length such as to flash, sublime, evaporate and/or oxidize away at least a portion of the plasticizer. In certain embodiments, a product is generated during heating, typically an oxidation product, which is drawn from the continuous elastomeric length for further treatment or disposal. The product may be in the form of smoke or some other gaseous output from the heating that can be drawn through hoods and other negative pressure means to be treated, stored and/or disposed of accordingly. In certain embodiments, the continuous elastomeric length is heated by contact with one or more heated calendar rolls, convective heat, heated air stream(s), microwave radiation, ultra-violet radiation, infra-red radiation, or a combination thereof.

Desirably, the continuous elastomeric length is exposed to oxygen during the heating step. In a particular embodiment, a continuous or substantially continuous current of gas such as air, nitrogen/oxygen mixture, or other gas with an oxidizer, is blown over the continuous elastomeric length while being heated. The heating takes place for a residence time suitable for removing the desired portion of plasticizer from the length. In certain embodiments, the residence time is a time for at least 30 seconds or 1 or 2 or 5 or 10 minutes, and in more particular embodiments within the range from 30 seconds or 1 or 2 or 5 minutes to 8 or 10 or 15 or 20 or 30 or 60 minutes.

It is desirable that, while heating the length, necking, sagging and other stress-caused deformations be avoided. In certain embodiments, while heating the continuous elastomeric length, a tension of from less than 5.0 or 4.0 or 3.0 or 2.0 or 1.0 or 0.5 g/cm·um (normalized to the average sheet thickness in micrometers) is maintained on the continuous elastomeric length as it is heated. In particular embodiments, the tension is within the range from 0.05 or 0.1 or 0.2 to 0.5 or 1.0 or 2.0 or 3.0 or 4.0 or 5.0 g/cm·µm. In certain other embodiments, with or without tension, the continuous elastomeric length may be fully supported such as by a flat conveyor that is substantially horizontal to support the weight of the length. In a particular embodiment, at least the portion of the length being heated is supported, while under tension or under no tension.

The heating means that is used to heat the continuous elastomeric length can be of any form. In one embodiment, the portion of the elastomeric length that is heated is passed through an oven, desirably a convection oven, providing uniform heating throughout or zoned heating sections. In another particular embodiment, where calendar rolls are also present or used exclusively, the calendar rolls are perforated to allow oxygen or other oxidizer to pass through and allow the face of the sheet against the calendar to be exposed to the oxygen.

In certain embodiments, after heating the sheet is desirably allowed to cool to below 200 or 180 or 160 or 140 or 120 or 100 or 80°C, wherein the heat-treated continuous elastomeric length can be rolled for transport, storage, or can be conveyed to the same or different heating means and the heating step repeated. The heating step can be only one step, or two or three or four or more heating steps. In a particular embodiment, the continuous elastomeric length is in a roll that is unrolled as at least a portion of the unrolled section of the continuous elastomeric length is heated.

In a particular embodiment, the continuous substantially flat sheet is in the form of a roll that is unrolled through an oven so that at least a portion of at least one surface of the sheet is heated for a residence time, the heated portion of the first continuous substantially flat sheet then being conveyed out of the oven to cool and be rolled.

In any case, the continuous elastomeric length is not substantially contacted with a solvent in desirable embodiments, at any step or at any time in between the steps from making the continuous elastomeric length, such as by casting or blowing or other means, until the tire is formed. By "substantially", what is meant is that there is no contact with solvent other than for minor reasons, such as to clear a small surface of the length for attaching it to a lead for pulling the continuous length through an oven, and such. A solvent is any compound or composition capable of dissolving the plasticizer such as, for example, acetone, ether, water, ethanol, methanol, dimethylformamide, tetrahydrofuran, sulfolane, toluene, benzene, dioxane, chloroform, methylene chloride, and combinations thereof. The solvent is not limited to liquids at room temperature, but is a liquid at room temperature (20°C) in a particular embodiment.

By the methods described herein, at least a portion of the plasticizer is removed from an elastomeric composition in sheet form that will be used in an innerliner. For example, in certain embodiments, the plasticizer is present in the continuous elastomeric length within the range from 10 wt% to 15 or 20 or 25 or 30 wt%, by weight of the continuous elastomeric length, while the heat-treated continuous elastomeric length comprises less than 10 or 8 or 6 or 4 or 2 or 1 or 0.5 wt% plasticizer, by weight of the heat-treated continuous elastomeric length.

The continuous elastomeric length, in the form of a sheet, comprises (or consists essentially of) at least one isobutylene-based elastomer or halogenated isobutylene-based elastomer and a plasticizer. The elastomeric sheet in the method of the invention comprises an isobutylene-based elastomer which is a functionalized poly(isobutyl-co-alkylstyrene). In this context, "consisting essentially of" means that the length comprises, as the only elastomer, the isobutylene-based elastomer or halogenated version thereof, and only minor amounts of other components to the extent that they do not alter the final cured properties. In certain embodiments, the elastomer is present in a composition with a thermoplastic described herein below, in a weight ratio of elastomer to thermoplastic of 55/45 to 80/20; preferably 60/40 to 75/25; more preferably 65/35 to 75/25.

Isobutylene-based elastomers can be described as random copolymer of a C4 to C7 isoolefin derived unit, such as isobutylene derived unit, and at least one other polymerizable unit such as a multiolefin. In one embodiment, the halogenated isobutylene-based copolymer is a butyl-type elastomer or branched butyl-type elastomer, especially brominated versions of these elastomers. Useful unsaturated isobutylene-based elastomers such as homopolymers and copolymers of olefins or isoolefins and other types of elastomers suitable for the continuous elastomeric lengths are well known, some of which are described herein.

The isoolefin is in a range from 70 to 99.5 wt% by weight of the total monomer mixture in one embodiment, and 85 to 99.5 wt% in another embodiment. The multiolefin component is present in the monomer mixture from 30 to 0.5 wt% in one embodiment, and from 15 to 0.5 wt% in another embodiment. In yet another embodiment, from 8 to 0.5 wt% of the monomer mixture is multiolefin. The isoolefin is preferably a C4 to C12 compound, nonlimiting examples of which are compounds such as isobutylene, isobutene, 2-methyl-1-butene, 3-methyl-1-butene, 2-methyl-2-butene, 1-butene, 2-butene, methyl vinyl ether, indene, vinyltrimethylsilane, hexene, and 4-methyl-1-pentene. The multiolefin is a C4 to C14 multiolefin such as isoprene, butadiene, 2,3-dimethyl-1,3-butadiene, myrcene, 6,6-dimethylfulvene, hexadiene, cyclopentadiene, and piperylene, and other monomers as known in the art. Other polymerizable monomers such as styrene, substituted styrenes and dichlorostyrene are also suitable for homopolymerization or copolymerization in butyl elastomers.

An example of an isobutylene-based elastomer is so called butyl rubber, or butyl elastomer comprising isobutylene monomers and isoprene monomers. Halogenated butyl elastomer is produced by the halogenation of the butyl elastomer. Halogenation can be carried out by any means and is not herein limited by the halogenation process. In one embodiment, the butyl elastomer is halogenated in hexane diluent at from 4 to 60°C using bromine (Br₂) or chlorine (Cl₂) as the halogenation agent. Commercial embodiments of a halogenated butyl elastomer include, but are not limited to, Bromobutyl 2222 and Bromobutyl 2255 (ExxonMobil Chemical Company).

Another useful embodiment of halogenated butyl elastomer is halogenated, branched or "star-branched" butyl elastomer. In one embodiment, the star-branched butyl elastomer ("SBB") is a composition comprising butyl elastomer and a polydiene or block copolymer. The polydienes, block copolymer, or branching agents (hereinafter "polydienes"), are typically cationically reactive and are present during the polymerization of the butyl or halogenated butyl elastomer, or can be blended with the butyl elastomer to form the SBB. The branching agent or polydiene can be any suitable branching agent. Preferably the branched or "star-branched" butyl elastomer used herein is halogenated. In one embodiment, the halogenated star-branched butyl elastomer ("HSBB") comprises a butyl elastomer, either halogenated or not, and a polydiene or block copolymer, either halogenated or not. The polydiene/block copolymer, or branching agents (hereinafter "polydienes"), are typically cationically reactive and are present during the polymerization of the butyl or halogenated butyl elastomer, or can be blended with the butyl or halogenated butyl elastomer to form the HSBB. A commercial embodiment of HSBB is Bromobutyl 6222 (ExxonMobil Chemical Company).

The isobutylene-based elastomer may also include functionalized interpolymers wherein at least some of the alkyl substituent groups present on the styrene monomer units contain benzylic halogen, such as brominated styrene or brominated alkylstyrene groups, or another functional group described further below. Desirable styrenic monomers in the isoolefin copolymer include styrene, methylstyrene, chlorostyrene, methoxystyrene, indene and indene derivatives, and combinations thereof. In a particular embodiment, the elastomer is a styrenic interpolymer. The interpolymer may be random elastomeric copolymers of a C₄ to C₇ isomonoolefins, such as isobutylene and a para-alkylstyrene comonomer, such as paramethylstyrene, containing at least 80%, more alternatively at least 90% by weight of the paraisomer and optionally include functionalized interpolymers wherein at least one or more of the alkyl substituents groups present in the styrene monomer units contain benzylic halogen or some other functional group. These may be referred to as functionalized poly(isobutylene*co*-alkylstyrene) ("FIMS"), having functional groups as described herein.

In another embodiment, the interpolymer may be a random elastomeric copolymer of ethylene or a C₃ to C₆ α-olefin and a para-alkylstyrene comonomer, such as paramethylstyrene containing at least 80%, alternatively at least 90% by weight of the paraisomer and optionally include functionalized interpolymers wherein at least one or more of the alkyl substituents groups present in the styrene monomer units contain benzylic halogen or some other functional group. Exemplary materials may be characterized as interpolymers containing the following monomer units randomly spaced along the polymer chain (1) and (2): 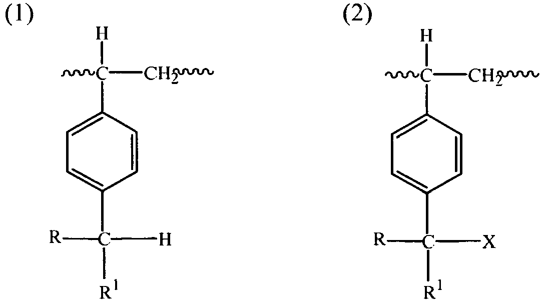 wherein R and R¹ are independently hydrogen, lower alkyl, such as a C₁ to C₇ alkyl and primary or secondary alkyl halides and X is a functional group such as halogen. In a particular embodiment, R and R¹ are each hydrogen. In certain embodiments, the amount of functionalized structure (2) is from 0.1 or 0.4 to 1 or 5 mol%.

The functional group X may be halogen or some other functional group which may be incorporated by nucleophilic substitution of benzylic halogen with other groups such as carboxylic acids; carboxy salts; carboxy esters, amides and imides; hydroxy; alkoxide; phenoxide; thiolate; thioether; xanthate; cyanide; cyanate; amino and mixtures thereof. These functionalized isomonoolefin copolymers, their method of preparation, methods of functionalization, and cure are more particularly disclosed in US 5,162,445, incorporated herein by reference. In another embodiment, the functionality is selected such that it can react or form polar bonds with functional groups present in the matrix polymer of a desirable composition, for example, acid, amino or hydroxyl functional groups, when the polymer components are mixed at high temperatures. In a particular embodiment, the elastomer is halogenated poly(isobutylene-*co*-*p*-methylstyrene), and in a more particular embodiment, is brominated poly(isobutylene-*co*-*p*-methylstyrene) ("BIMS").

In certain embodiments, functionalized materials are elastomeric random interpolymers of isobutylene and para-methylstyrene containing from 0.5 to 20 mol% paramethylstyrene wherein up to 60 or 50 or 20 or 10 mol% of the methyl substituent groups present on the benzyl ring contain a bromine or chlorine atom, such as a bromine atom (para-(bromomethylstyrene)), as well as acid or ester functionalized versions thereof. Expressed another way, the functionalized para-methylstyrene-derived units comprise within the range from 4 or 5 or 6 to 9 or 11 or 13 or 15 or 17 wt%, by weight of the elastomer.

In certain embodiments, the continuous elastomeric length comprises, or consists essentially of, the isobutylene-based elastomer and a thermoplastic, and in particular, is an at least partially cured composition. The combination of the elastomer and thermoplastic is often referred to as a "thermoplastic elastomer composition." In a particular embodiment, the elastomer and thermoplastic are dynamically vulcanized, resulting in a DVA. As used in this context, "consisting essentially of" means that the composition includes only the claimed elastomer and claimed thermoplastic and only minor amounts of other additives that do not effect its cured properties.

Useful thermoplastic or engineering resin (those terms are used interchangeably) is defined to be any thermoplastic polymer, copolymer or mixture thereof having a Young's modulus of more than 500 MPa, and, preferably, a melting point of 170°C to 270°C, including, but not limited to, one or more of the following: a) polyamide resins: Nylon 6 (N6), Nylon 66 (N66), Nylon 46 (N46), Nylon 11 (N11), Nylon 12 (N12), Nylon 610 (N610), Nylon 612 (N612), Nylon 6/66 copolymer (N6/66), Nylon 6/66/610 (N6/66/610), Nylon MXD6 (MXD6), Nylon 6T (N6T), Nylon 6/6T copolymer, Nylon 66/PP copolymer, Nylon 66/PPS copolymer; b) polyester resins: polybutylene terephthalate (PBT), polyethylene terephthalate (PET), polyethylene isophthalate (PEI), PET/PEI copolymer, polyacrylate (PAR), polybutylene naphthalate (PBN), liquid crystal polyester, polyoxalkylene diimide diacid/polybutyrate terephthalate copolymer and other aromatic polyesters; c) polynitrile resins: polyacrylonitrile (PAN), polymethacrylonitrile, acrylonitrile-styrene copolymers (AS), methacrylonitrile-styrene copolymers, methacrylonitrile-styrene-butadiene copolymers; d) polymethacrylate resins: polymethyl methacrylate, polyethylacrylate; e) polyvinyl resins (e.g., vinyl acetate (EVA), polyvinyl alchohol (PVA), vinyl alchohol/ethylene copolymer (EVOA), polyvinylidene chloride (PVDC), polyvinyl chloride (PVC), polyvinyl/polyvinylidene copolymer, polyvinylidene chloride/methacrylate copolymer; f) cellulose resins: cellulose acetate, cellulose acetate butyrate; g) fluorine resins: polyvinylidene fluoride (PVDF), polyvinyl fluoride (PVF), polychlorofluoroethylene (PCTFE), tetrafluoroethylene/ethylene copolymer (ETFE); h) aromatic polyimides; i) polysulfones; j) polyacetals; k) polyactones; 1) polyphenylene oxide and polyphenylene sulfide; m) styrene-maleic anhydride; n) aromatic polyketones; and o) mixtures of any and all of a) through n) inclusive as well as mixtures of any of the illustrative or exemplified engineering resins within each of a) through n) inclusive. For purposes of the present disclosure, this definition of engineering resin excludes polymers of olefins, such as polyethylene and polypropylene. Preferred engineering resins include polyamide resins and mixtures thereof; particularly preferred resins include Nylon 6, Nylon 6/66 copolymer, Nylon 11, Nylon 12, Nylon 610, Nylon 612 and their blends.

Other elastomers (or "secondary elastomer") can be used in combination with the halogenated isobutylene-based elastomer. Generally, the secondary elastomers useful in the continuous elastomeric lengths include, for example natural elastomer (NR), high diene elastomers, isoprene elastomer (IR), epoxylated natural elastomer, styrene butadiene elastomer (SBR), polybutadiene elastomer (BR) (including high cis-BR and low cis-BR), nitrile butadiene elastomer (NBR), hydrogenated NBR, hydrogenated SBR, olefin elastomers (for example, ethylene propylene elastomers (including both EPDM and EPM), maleic acid-modified ethylene propylene elastomers (M-EPM), butyl elastomer (IIR), isobutylene and aromatic vinyl or diene monomer copolymers, acrylic elastomers (ACM), ionomers, other halogen-containing elastomers (for example, chloroprene elastomers (CR), hydrin elastomers (CHR), chlorosulfonated polyethylenes (CSM), chlorinated polyethylenes (CM), maleic acid-modified chlorinated polyethylenes (M-CM), silicone elastomers (for example, methylvinyl silicone elastomers, dimethyl silicone elastomers, methylphenylvinyl silicone elastomers), sulfur-containing elastomers (for example, polysulfide elastomers), fluoro elastomers (for example, vinylidene fluoride elastomers, fluorine-containing vinyl ether-based elastomers, tetrafluoroethylene-propylene elastomers, fluorine-containing silicone elastomers, fluorine-containing phosphagen elastomers), thermoplastic elastomers (for example, styrene-containing elastomers, olefin elastomers, ester elastomers, urethane elastomers, or polyamide elastomers), and their mixtures.

A secondary elastomer, dispersed in the thermoplastic matrix in the form of small particles, as noted, can optionally be cured, crosslinked or vulcanized, partially, substantially or fully, as described with regard to the isobutylene-based elastomer or halogenated isobutylene-based elastomer. Such crosslinking can be accomplished in the course of dispersing the secondary elastomer in the polyamide matrix by using the same dynamic vulcanization method applied to the halogenated elastomer component.

Other compatibilizers include copolymers such as those having the structure of both or one of the thermoplastic resin and elastomer polymer or a structure of a copolymer having an epoxy group, carbonyl group, halogen group, amine group, maleated group, oxazoline group, hydroxy group, etc., capable of reacting with the thermoplastic resin or elastomer polymer. The secondary elastomer can be selected based upon the type of the thermoplastic resin polymer and elastomer polymer to be mixed. Useful secondary elastomers are selected from the group consisting of maleic anhydride grafted elastomers such as maleic anhydride grafted ABS (acrylonitrile-butadiene-styrene), EPDM (ethylene-propylene-diene elastomer), SEBS (styrene- ethylene/butadiene-styrene), and the like and maleated ethylene copolymer elastomers such as maleated ethylene-propylene (EPM), ethylene-butene, ethylene-hexene, ethylene-octene, ethylene-decene, ethylene-propylene-diene (EPDM), ethylene-vinyl acetate, ethylene-methyl acrylate, ethylene-ethyl acrylate, ethylene-acrylic acid, and the like and mixtures thereof. Also potentially useful elastomers include EPDM/styrene, EPDM/acrylonitrile graft copolymer and their maleic acid-modified forms; styrene/maleic acid copolymer; reactive phenoxy thermoplastic resin; and their mixtures.

When present, the amount of the secondary elastomer-functionalized or not-is typically less than 20 wt%; preferably less than 10 wt%; generally 0.5 wt% to 20 wt%; for example 5 wt% to 15 wt%; such as 7.5 wt% to 12.5 wt%.

The compositions described herein may have one or more filler components such as calcium carbonate, clay, mica, silica and silicates, talc, titanium dioxide, starch and other organic fillers such as wood flour, and carbon black. Suitable filler materials include carbon black such as channel black, furnace black, thermal black, acetylene black, lamp black, modified carbon black such as silica treated or silica coated carbon black, and the like. Reinforcing grade carbon black is preferred. The filler may also include other reinforcing or non-reinforcing materials such as silica, clay, calcium carbonate, talc, titanium dioxide and the like. The filler may be present at a level of from 0 to 30 percent by weight of the elastomer present in the composition.

Exfoliated, intercalated, or dispersed clays may also be present in the composition. These clays, also referred to as "nanoclays", are well known. Swellable layered clay materials suitable for the purposes of the present disclosure include natural or synthetic phyllosilicates, particularly smectic clays such as montmorillonite, nontronite, beidellite, volkonskoite, laponite, hectorite, saponite, sauconite, magadite, kenyaite, stevensite and the like, as well as vermiculite, halloysite, aluminate oxides, hydrotalcite and the like. These layered clays generally comprise particles containing a plurality of silicate platelets having a thickness typically 4 to 20 Å in one embodiment, and 8 to 12 Å in another embodiment, bound together and containing exchangeable cations such as Na⁺, Ca⁺², K⁺ or Mg⁺² present at the interlayer surfaces.

Layered clay may be intercalated and exfoliated by treatment with organic molecules (swelling agents) capable of undergoing ion exchange reactions with the cations present at the interlayer surfaces of the layered silicate. Suitable swelling agents include cationic surfactants such as ammonium, alkylamines or alkylammonium (primary, secondary, tertiary and quaternary), phosphonium or sulfonium derivatives of aliphatic, aromatic or arylaliphatic amines, phosphines and sulfides.

When present, the amount of exfoliated, intercalated, or dispersed clay incorporated in the compositions described herein is an amount sufficient to develop an improvement in the mechanical properties or barrier properties of the composition, for example tensile strength or air/oxygen permeability. Amounts typically can be from 0.5 to 15 wt% in one embodiment, or 1 to 10 wt% in another embodiment, and 1 to 5 wt% in yet another embodiment, based on the polymer content of the composition.

As used herein, the term "process oil" means both the petroleum derived process oils and synthetic plasticizers. A process or plasticizer oil may be present in air barrier compositions. Such oils are primarily used to improve the processing of the composition during preparation of the layer, for example, mixing, calendering, etc. Suitable plasticizer oils, particularly for the elastomer component(s), include aliphatic acid esters or hydrocarbon plasticizer oils such as paraffinic or naphthenic petroleum oils. The preferred plasticizer oil for use in standard, non-DVA, non-engineering resin-containing innerliner compositions is a paraffinic petroleum oil; suitable hydrocarbon plasticizer oils for use in such innerliners include oils having the following general characteristics.

Generally, the process oil may be selected from paraffinic oils, aromatic oils, naphthenic oils, and polybutene oils. Polybutene process oil is a low molecular weight (less than 15,000 Mn) homopolymer or copolymer of olefin-derived units having from 3 to 8 carbon atoms, more preferably 4 to 6 carbon atoms. In another embodiment, the polybutene oil is a homopolymer or copolymer of a C4 raffinate. Rubber process oils also have ASTM designations depending on whether they fall into the class of paraffinic, naphthenic or aromatic hydrocarbonaceous process oils. The type of process oil utilized will be that customarily used in conjunction with a type of elastomer component and a skilled elastomer chemist will recognize which type of oil should be utilized with a particular elastomer in a particular application. For a thermoplastic elastomer composition the oil may be present at a level of 0 or 0.5 or 1 wt% to 20 or 40 wt% of the total composition; preferably oil is not included in order to maximize impermeability of the composition.

Minimizing the viscosity differential between the elastomer component and engineering resin during mixing and/or processing enhances uniform mixing and fine blend morphology, in other words small, dispersed particles of vulcanized elastomer, that significantly enhance good blend mechanical as well as desired permeability properties. However, as a consequence of the flow activation and shear thinning characteristic typical of some elastomers. In view of the lower viscosity of FIMS at high shear rates and temperatures, if viscosity of the Nylon component is to be selected in order to be similar to that of the elastomer, it is necessary to use either low molecular weight grade Nylons having lower viscosity or Nylons in combination with plasticizer, or a combination of both approaches, for further viscosity reduction.

In certain embodiments, a plasticizer is combined with the isobutylene-based elastomer and thermoplastic blend. Suitable plasticizers include those sold under various trademarks including Sunmide™ (Sanwa Chemical Industry Co., Ltd.) and Uni-Rez™ (Arizona Chemical). Such materials typically have a molecular weight of less than 20,000 Daltons; such as 1,000 to 18,000 Daltons; preferably 3,000 to 17,000 Daltons and have flash points greater than 250°C, brittleness temperatures of less than -20°C, and softening temperature of less than about 180°C.

Furthermore, useful low molecular weight amides exhibit a viscosity at 200°C of less than 15 Pascal-seconds (Pa-s); alternatively 0.05 to 12 Pa-s; preferably 0.2 to 10 Pa-s. Suitable products are commercially available covering the full range of viscosities above, including: Sunmide products exhibiting viscosities ranging from 0.25 Pa-s to 0.60 Pa-s measured at 190°C; and 0.4 Pa-s to 15 Pa-s measured at 200°C; as well as Uni-Rez grades 2611-2722 and specifically including grades 2614 having a viscosity of 1.1, grade 2633 having a viscosity of 4.3 and grade 2653 having a viscosity of 7.5, all measured at 200°C.

Plasticizers can be selected from the group consisting of alkyl or aryl sulfonamide plasticizers. Sulfonamide plasticizers, such as alkyl or aryl sulfonamides, comprise a preferred class of plasticizers for polyamides, including for example, N-butyl benzene sulfonamide, N-cyclohexyl-p- toluene sulfonamide, o,p-toluenesulfonamide, N-ethyl- o,p-toluenesulfonamide and N-ethyl-o-toluenesulfonamide. In another embodiment, process oils such as naphthenic, aromatic or paraffinic extender oils may be present at 1 to 5 phr. In still another embodiment, naphthenic, aliphatic, paraffinic and other aromatic oils are substantially absent from the composition. By "substantially absent", it is meant that naphthenic, aliphatic, paraffinic, mineral and other aromatic oils may be present, if at all, to an extent no greater than 2 phr in the composition. In any case, the plasticizers may be present with the elastomer in the continuous elastomeric length within the range of 0.5 or 1 or 2 or 3 or 4 or 5 to 10 or 15 or 20 wt%, by weight of the composition in which it is blended, or by weight of the continuous elastomeric length.

With reference to the elastomers referred to herein, the terms "cured," "vulcanized," or "crosslinked" refer to the chemical reaction comprising forming bonds as, for example, during chain extension, or crosslinks between polymer chains comprising the polymer or elastomer to the extent that the elastomer undergoing such a process can provide the necessary functional properties resulting from the curing reaction when the tire is put to use. Generally, the elastomeric compositions used to produce the continuous elastomeric lengths described herein are at least partially, if not fully, crosslinked prior to being heated to remove the plasticizer and prior to being assembled into a tire. Crosslinking or vulcanization is accomplished by incorporation of curing agents and/or accelerators; the overall mixture of such agents being typically referred to as a cure "system." Curing agents include those components described above that facilitate or influence the cure of elastomers, and generally include metals, metal oxides, accelerators, sulfur, peroxides, and other agents common in the art. Crosslinking or curing agents include at least one of, for example, sulfur, zinc oxide, and fatty acids and mixtures thereof. Peroxide-containing cure systems may also be used. Generally, polymer compositions may be crosslinked by adding curative agents, for example sulfur, metal oxides (i.e., zinc oxide), organometallic compounds, radical initiators, etc. and heating the composition or mixture.

Generally, the term "dynamic vulcanization" is used to denote a vulcanization process in which a thermoplastic or engineering resin and at least one vulcanizable elastomer are mixed under conditions of high shear and elevated temperature in the presence of a curing agent or curing system for the elastomer(s). As a result, the elastomer is simultaneously crosslinked and dispersed as particles, preferably in the form of a microgel, within the resin which forms a continuous matrix. The resulting composition is known in the art as a "dynamically vulcanized alloy" or DVA. Typically, dynamic vulcanization is effected by mixing the ingredients at a temperature which is at or above the curing temperature of the elastomer, and at or above the melting temperature of the resin, using equipment such as roll mills, Banbury™ mixers, continuous mixers, kneaders, or mixing extruders (such as twin screw extruders).

The curing agent(s), with or without the use of at least one accelerator, is often referred to in the art as a curing "system" for the elastomer(s). A cure system is used because typically more than one curing agent is employed for beneficial effects, particularly where a mixture of high diene elastomer and a less reactive elastomer is used. Furthermore, the properties of the cure system can be adapted to the mixing process so that the conditions of the desired continuous elastomeric lengths can be met. For example, to determine the cure response of the particular elastomer(s) present in a composition, the elastomer(s) and cure system can be combined by means known to those skilled in the art, for example, on a two-roll mill, Banbury mixer or mixing extruder. A sample of the mixture, often referred to as the "accelerated" compound, can be cured under static conditions, such as in the form of a thin sheet using a mold that is subjected to heat and pressure in a press. Samples of the accelerated, thin sheets, cured for progressively longer times and/or at higher temperatures, are then tested for stress strain properties and/or crosslink density to determine the state of cure (described in detail in American Society for Testing and Materials, Standard ASTM D412).

Alternatively, the accelerated compound can be tested for state of cure using an oscillating disc cure rheometer test (described in detail in American Society for Testing and Materials, Standard ASTM D2084). Thereafter the overall time and temperature of the dynamic vulcanization process can be adjusted so that the vulcanizable elastomers present in the composition are sufficiently cured to achieve the desired properties of the thermoplastic composition of which they are a part, for example, an air or fluid retention barrier such as an innerliner for a tire.

It will be appreciated that the vulcanizable elastomer, for example the halogenated isobutylene elastomer such as FIMS or BIMS (or a mixture of such elastomers), will be cured to at least 50% of the maximum state of cure (a "partial" cure) of which it is capable based on the cure system, time and temperature, and typically, the state of cure of such elastomer will exceed 50% of maximum cure. Since the second elastomer can also comprise a vulcanizable elastomer, where such second elastomer is vulcanized, for example according to dynamic vulcanization technology as described herein, it too typically will be cured to at least 50% of the maximum state of cure of which it is capable based on its curative or cure system and the time and temperature at which it is processed. The two elastomers may be differentially vulcanized as well. In any case, an elastomer is only partially cured if the cure state is less than 90 or 80 or 70 or 60 or 50%. Alternatively, as discussed herein, such second elastomer can also be grafted, linked and/or associated with the polyamide resin, with or without the use of curatives, so that its state of cure is not a limitation, provided that it is sufficiently dispersed in a small enough particle size so as to provide the properties desired for the use to which the composition will be put.

The cure system can be dispersed in a suitable concentration into the elastomer component, the elastomer component optionally containing one or more filler, extender and/or plasticizer by, for example, mixing the elastomer and the cure system components in a process step prior to addition of the elastomer-containing composition to the thermoplastic using any mixing equipment commonly used in the elastomer industry for such purpose, for example, a two-roll elastomer mill, a Banbury mixer, a mixing extruder and the like. Such mixing is commonly referred to as "accelerating" the elastomer composition. In one embodiment, at least one curing agent is typically present at 0.1 to 15 phr; alternatively at 0.5 to 10 phr. Curatives and accelerators can be combined as is well known in the art.

The preferred polymer components comprise halogenated isobutylene-containing copolymers as the vulcanizable component(s), for example, halogenated butyl such as chlorinated butyl or brominated butyl, and brominated poly(isobutylene-co-p-methylstyrene) (BIMS copolymer), and a thermoplastic polymer such as Nylon or a blend of various Nylon polymers. It is particularly preferred that the dynamically vulcanized compositions described herein comprise the halogenated elastomer component(s) in the form of dispersed, partially or fully cured, small particles in a continuous matrix of engineering resin.

By molding or blow molding the thermoplastic elastomer composition obtained into a sheet (continuous elastomeric length) using a T-sheeting die, straight or crosshead structure tubing die, inflation molding cylindrical die, etc., at the end of a single-screw extruder, or by calendering, it is possible to use the composition as the air permeation preventive layer, for example, an innerliner, of a pneumatic tire and as a component or layer of a hose, etc. The thermoplastic elastomer compositions described herein may be taken up into strands once, pelletized, then molded by using a single-screw extruder that is typically used for resin.

The sheet thus obtained can be effectively used for an innerliner layer of a pneumatic tire or the hose tube or hose cover of a low gas permeable hose. Furthermore, the low permeability characteristics of the composition are suitable for uses with fluids other than gasses, for example, liquids such as water, hydraulic fluid, brake fluid, heat transfer fluid, etc., provided that the layer in direct contact with the fluid has suitable resistance to the fluid being handled.

### EXAMPLES

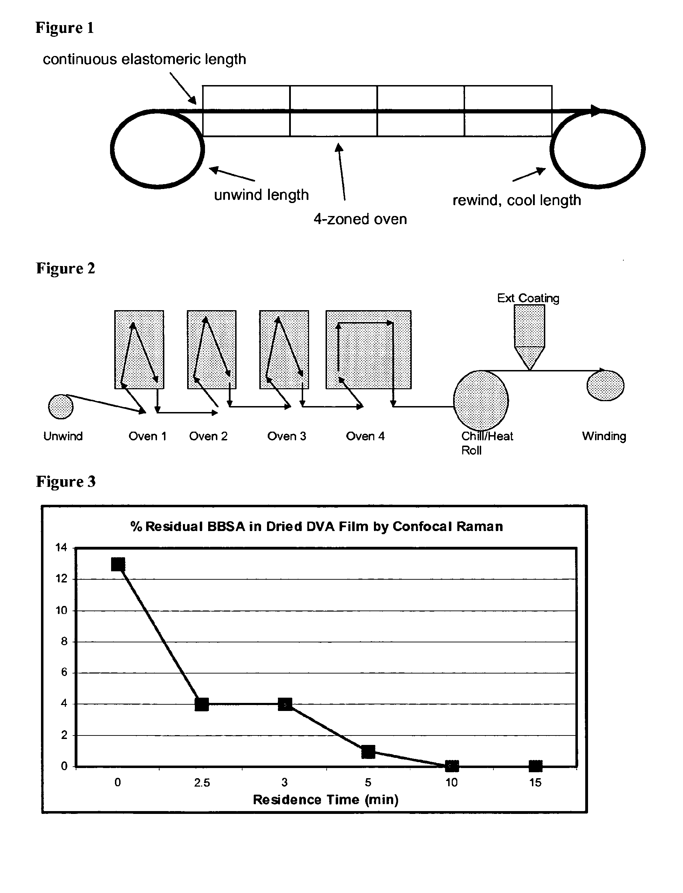

A first set of experiments was carried out using the following materials and procedures, the data for which is summarized in Table 1 and Figure 3. The continuous elastomeric length of elastomeric material used in this example was a continuous substantially flat sheet of a DVA of 63 phr Nylon 6/66 (UBE 5033B) and 100 phr brominated poly(isobutylene-*co*-*p*-methylstyrene) (0.75 mol% Br, 5 wt% paramethylstyrene in the copolymer) with 27 phr butyl-benzene sulfonamide ("BBSA"), with 10 phr maleated ethylene- ethyl acrylate, 2.5 phr SG2000 talc and less than 1 phr each of Irganox™ 1098, Tinuvin™ 622LD, copper iodide, zinc oxide, zinc stearate, and stearic acid.

An 18m (60 foot) oven was used and kept at 180°C, the width of the continuous sheet was 20 inches (510 mm), and the average thickness was 217 µm. More particularly, the following procedure was used to heat the continuous sheet of DVA:
1. Set up the oven set points to 180°C. The oven is 60 ft long, hot air floating oven, top and bottom. So, there are six set points.
2. Use a leader to thread up the line through idlers, oven, and then to rewind station.
3. Put the DVA roll on the unwind station.
4. Wipe the end of the DVA sheet surface with acetone, splice and staple the leader onto the DVA sheet.
5. Run the DVA sheet at the indicated speed in Table 1.
6. Rewind the DVA sheet at less than 1 pounds/inch tension.
7. Slab sample off the top of the roll at the rewind station.
8. Results recorded in Table 1.

**Table 1**

| **Sample** | **Speed (fpm)** | **Residence Time (mins)** | **Residual BBSA (wt%)** |
|---|---|---|---|
| 1 | - | 0 | 13 |
| 3 | 24 | 2.5 | 4 |
| 4 | 20 | 3 | 4 |
| 5 | 12 | 5 | 1 |
| 6 | 6 | 10 | 0 |
| 2 | 4 | 15 | 0 |
| 7 | 4 | 15 | 0 |

Measurement of residual BBSA was determined with confocal Raman microscopy. All spectra were acquired with a 785 nm laser and a 40x, 0.6 NA Plan Fluor air objective. A film sample was placed beneath the objective and the surface was in focus when the interference pattern of the laser produced a minimum spot size. The apparent focus was lowered approximately 10 µm beneath the surface for spectral acquisition. One hundred spectra were acquired, each spaced one micron apart laterally. For each recorded spectrum, two 5 second acquisitions were obtained and averaged so that cosmic rays could be removed from the data. After collection, a second-order polynomial was subtracted from each spectrum to remove the offset and flatten the baseline. Spectra with levels of fluorescence that obscure data are not included in the average value. This is assumed to be a valid step because none of the four components mentioned above exhibit significant fluorescence. Pure component spectra of brominated poly(isobutylene-*co-p*-methylstyrene), Nylon 6/66, AR201 (maleated ethylene-ethyl acrylate), and BBSA were also obtained under similar conditions; only a single spectrum was obtained with a shorter acquisition and the depth into the material was not important. A linear least-squares routine within the Witec™ Project software was used to fit the pure component spectra to each of the 100 film spectra (each film spectrum was independently fit). The portion of the spectrum used for the least-squares analysis was between 680-1800 cm⁻¹. The output from the least-squares analysis in the software was converted into concentration percent by summing the 4 output values from the software and dividing each individual value by the summed total. The result was a set of four data outputs, each being a concentration percent of a specific component at each of the 100 data points. These 100 data points are averaged and that result was reported.

A second set of experiments was carried out using a continuous elastomeric length having the same composition as above, and run through an oven as depicted in Figure 1. Three samples, samples A, B and C, were run under the following conditions, in order, and summarized in Table 2, a "control" being a film prior to heat treating:

### Condition 1:

- Samples were died out of the film using a 3.5 in round die, run at 160°C.
- Very little neck-in sample 1 (5 mm).
- About 3-4% BBSA remained in the film.
- Film does have some self-tack.

### Condition 2:

- Raising Temp to 180 °C
- Slight reduction in tension
- BBSA is only about 7%
- Film B appears darker, and stronger than A

### Condition 3:

• Same as Condition 2 at 4 fpm.

**Table 2: Second set of Experiments**

| **Sample** | **Oven Temp Z1 [°C]** | **Oven Temp Z2 [°C]** | **Oven Temp Z3 [°C]** | **Line Speed [ft/min]** | **Oven Res Time [min]** | **Original Gauge µm** |
|---|---|---|---|---|---|---|
| A | 160 | 160 | 160 | 2 | 30 | 285 |
| B | 180 | 180 | 180 | 2 | 30 | 285 |
| C | 180 | 180 | 180 | 4 | 15 | 285 |

**Table 2 (continued): Second set of Experiments**

| **Sample** | **Original Layflat, mm** | **Original Mass (3**.**5**" **Die) [g]** | **Pieces for Mass** | **Final Gauge [µM]** | **Final Layflat [mm]** | **Final Mass [g]** | **Est. BBSA Loss** |
|---|---|---|---|---|---|---|---|
| A | 545 | 1.801 | 15 | 222 | 540 | 1.262 | 10% |
| B | 545 | 1.801 | 15 | 222 | 536 | 1.305 | 7% |
| C | 545 | 1.801 | 15 | 201 | 536 | 1.176 | 8% |

Various properties of the samples A, B and C, with respect to the Control, were measured and are summarized in Tables 3 and 4.

**Table 3. Properties of the lengths in second set of experiments.**

| **Property** | | **Control** | **A** | **B** | **C** |
|---|---|---|---|---|---|
| Density [g/cc] | - | - | 1.024 | 1.021 | 1.0235 |
| 1% Secant [psi] | MD | 6015 | 12526 | 15393 | 16602 |
| | TD | 6516 | 11942 | 14550 | 14256 |
| Tensile Strength [psi] | MD | 2657 | 3121 | 3105 | 3245 |
| | TD | 2435 | 2940 | 2780 | 2707 |
| Elongation at Break, % | MD | 435 | 350 | 337 | 314 |
| | TD | 507 | 389 | 365 | 353 |

**Table 4. Permeability data of films in second set of experiments at 762 mmHg at 60°C.**

| | **O₂** | **Test Area** | **Thickness** | **Trans Rate** | **Permeation Coefficient** | **Permeability Coefficient** | **Permeance Coefficient** |
|---|---|---|---|---|---|---|---|
| Sample¹ | % | cm² | mm | cc/(m²•day) | cc*mm/(m²•day) | cc*mm/(m²•day•mmHg) | cc/mm(m²•day•mmHg) |
| Control | - | - | - | - | - | 0.415 | - |
| Control' | - | - | - | - | - | 0.055 | - |
| A' | 20.9 | 10 | 0.2250 | 217 | 49 | 0.0640 | 0.2846 |
| A | 20.9 | 10 | 0.2190 | 212 | 46 | 0.0610 | 0.2784 |
| B' | 20.9 | 10 | 0.2400 | 170 | 41 | 0.0535 | 0.2228 |
| B | 20.9 | 10 | 0.2290 | 170 | 39 | 0.0512 | 0.2235 |
| C' | 20.9 | 10 | 0.1890 | 196 | 37 | 0.0487 | 0.2578 |
| C | 20.9 | 10 | 0.2000 | 200 | 40 | 0.0526 | 0.2629 |

| | | | | | | | |
|---|---|---|---|---|---|---|---|
| 1. Each sample was measured before (A', B', etc.) and after being heat-treated. | | | | | | | |

When possible, standard ASTM tests were used to determine the DVA physical properties (see Table 1). Stress/strain properties (tensile strength, elongation at break, modulus values, energy to break) were measured at room temperature using an Instron^{™} 4204. Tensile measurements were done at ambient temperature on specimens (dog-bone shaped) width of 0.16 inches (0.41 cm) and a length of 0.75 inches (1.91 cm) length (between two tabs) were used. The thickness of the specimens varied and was measured manually by a Mahr Federal Inc. thickness guage. The specimens were pulled at a crosshead speed of 20 inches/min. (51 cm/min.) and the stress/strain data was recorded. The average stress/strain value of at least three specimens is reported. Shore A hardness was measured at room temperature by using a Zwick Durometer after 15 seconds indentation. LCR viscosity was measured with a Dynisco^{™} capillary rheometer at 30/1 L/D (length/diameter) at 220°C at 1200 l/s. The melting point was measured by differential scanning calorimetry at 10°/minute.

Permeability testing proceeded according to the following description. All examples were compression molded with slow cooling to provide defect free pads. A compression and curing press was used for elastomer samples. Typical thickness of a compression molded pad is around 0.38 mm using an Arbor press, 2 inch diameter disks were then punched out from molded pads for permeability testing. These disks were conditioned in a vacuum oven at 60°C overnight prior to the measurement. The oxygen permeation measurements were done using a Mocon OX-TRAN 2/61 permeability tester at 40°C under the principle of R. A. Pasternak et. al. in 8 JOURNAL OF POLYMER SCIENCE: PART A-2 467 (1970). Disks thus prepared were mounted on a template and sealed with a vacuum grease. A steady flow of oxygen at 10 mL/min was maintained on one side of the disk, while a steady flow of nitrogen at 10 mL/min was maintained on the other side of the disk. Using the oxygen sensor on the nitrogen side, increase in oxygen concentration on the nitrogen side with time could be monitored. The time required for oxygen to permeate through the disk, or for oxygen concentration on the nitrogen side to reach a constant value, is recorded and used to determine the oxygen gas permeability.

Having described the elastomeric lengths and the method of treating them, as well as the methods of forming a pneumatic innerliner and tire, described herein in numbered embodiments is:
1. A method of preparing a continuous elastomeric length for a pneumatic innerliner comprising:
   providing a continuous elastomeric length comprising a plasticizer and an elastomer;
   heating the continuous elastomeric length for a residence time at a temperature no higher than 15 or 10 or 5 or 0°C above the flash point of the plasticizer; and
   cooling the length to form a heat-treated continuous elastomeric length having a level of plasticizer less than the level of plasticizer in the continuous elastomeric length.
2. A method of making a pneumatic tire comprising the method of embodiment 1, further comprising:
   cutting the heat-treated continuous elastomeric length or laminate comprising the heat-treated continuous length to form a pneumatic innerliner unit, and splicing the pneumatic innerliner unit to itself to form a pneumatic innerliner, wherein a step of removing surface plasticizer is substantially absent.
3. The method of embodiment 1 or 2, wherein the level of plasticizer in the heat-treated continuous elastomeric length is at least 10 or 20 or 30 or 40 or 50 or 60 or 70 or 80 or 90% lower than the level of plasticizer in the continuous elastomeric length.
4. A method of making a pneumatic tire comprising the method of embodiment 1, and further comprising:
   cutting the heat-treated continuous elastomeric length or laminate comprising the heat-treated continuous length, the length being in the form of a sleeve, to form a pneumatic innerliner sleeve, and incorporating the pneumatic innerliner sleeve into a tire.
5. A method of preparing a continuous elastomeric length for a pneumatic innerliner comprising:
   providing a continuous elastomeric length comprising a plasticizer and an elastomer;
   cutting the continuous elastomeric length to form a pneumatic innerliner unit;
   heating the pneumatic innerliner unit for a residence time at a temperature no higher than 15 or 10 or 5 or 0°C above the flash point of the plasticizer; and
   cooling the pneumatic innerliner unit to form a heat-treated pneumatic innerliner having a level of plasticizer less than the level of plasticizer in the continuous elastomeric length.
6. A method of making a pneumatic tire comprising the method of embodiment 5, further comprising:
   splicing the heat-treated pneumatic innerliner unit to itself to form a pneumatic innerliner, wherein a step of removing surface plasticizer is substantially absent.
7. A method of making a pneumatic tire comprising the method of embodiment 5, and further comprising:
   providing the heat-treated pneumatic innerliner or laminate comprising the heat-treated pneumatic innerliner, the innerliner being in the form of a sleeve, and incorporating the pneumatic innerliner sleeve into a tire.
8. The method of any of the previous numbered embodiments, wherein the air permeability of the heat-treated continuous elastomeric length is at least 10 or 30 or 50 or 100 or 200% lower than the air permeability of the continuous elastomeric length.
9. The method of any of the previous numbered embodiments, wherein a laminate is formed comprising the heat-treated continuous elastomeric length and at least one layer of an adhesive material.
10. The method of embodiment 9, wherein the adhesive material comprises a polar-functionalized polymer, and in a particular embodiment is selected from the group consisting of styrenic copolymers, epoxidized styrenic copolymers, isobutylene-based copolymers, epoxidized isobutylene-based copolymers, maleated styrenic copolymers, maleated isobutylene-based copolymers, and combinations thereof.
11. The method of any of the previous numbered embodiments, wherein the permeation coefficient of the heat-treated elastomeric length and/or the pneumatic innerliner unit or innerliner is less than 60 or 50 or 40 cc·mm/m²·day, or wherein the permeability coefficient is less than 1.000 or 0.500 or 0.100 or 0.080 cc·mm/m²·day·mmHg.
12. The method of any of the previous numbered embodiments, wherein the continuous elastomeric length is exposed to oxygen during the heating step.
13. The method of any of the previous numbered embodiments, wherein a product is generated during heating which is drawn from the continuous elastomeric length for further treatment or disposal.
14. The method of any of the previous numbered embodiments, wherein the continuous elastomeric length comprises an isobutylene-based elastomer.
15. The method of any of the previous numbered embodiments, wherein the continuous elastomeric length comprises (or consists essentially of) a dynamically vulcanized alloy of an engineering resin and a functionalized poly(isobutylene-co-alkylstyrene).
16. The method of any of the previous numbered embodiments, a continuous or substantially continuous current of gas is blown over the continuous elastomeric length while being heated.
17. The method of any of the previous numbered embodiments, wherein the continuous elastomeric length is in a roll that is unrolled as at least a portion of the unrolled section of the continuous elastomeric length is heated.
18. The method of embodiment 17, wherein a tension of from less than 5.0 or 4.0 or 3.0 or 2.0 or 1.0 or 0.5 (g/cm·µm) is maintained on the continuous elastomeric length as it is heated.
19. The method of any of the previous numbered embodiments, wherein the plasticizer is selected from alkyl or aryl sulfonamides, alkyl or aryl phthalates, alkyl or aryl phosphates, adipates, glycolates, mineral oil, polyolefin oils, paraffinic oils, and combinations thereof.
20. The method of any of the previous numbered embodiments, wherein the plasticizer is an alkyl or aryl sulfonamide.
21. The method of any of the previous numbered embodiments, wherein the plasticizer is present in the continuous elastomeric length within the range from 1 or 2 or 3 or 4 or 6 wt% to 10 or 15 or 20 or 25 or 30 wt%, by weight of the continuous elastomeric length.
22. The method of any of the previous numbered embodiments, wherein the heat-treated continuous elastomeric length comprises less than 10 or 8 or 6 or 4 or 2 or 1 or 0.5 wt% plasticizer, by weight of the heat-treated continuous elastomeric length.
23. The method of any of the previous numbered embodiments, wherein the continuous elastomeric length is not contacted with a solvent.
24. The method of any of the previous numbered embodiments, wherein the residence time is a time within the range from 30 seconds or 1 or 2 or 5 minutes to 8 or 10 or 15 or 20 or 30 or 60 minutes.
25. A pneumatic innerliner made by the method of the method of any of the previous numbered embodiments.
26. A pneumatic tire made by the method of any of the previous numbered embodiments.
27. A method of preparing a continuous elastomeric sheet for a pneumatic innerliner comprising:
   providing a continuous substantially flat sheet with an average thickness within the range from 10 or 20 or 40 or 50 µm to 200 or 250 or 300 or 400 or 500 µm and comprising (or consisting essentially of) a dynamically vulcanized alloy of an engineering resin and a functionalized poly(isobutylene-co-alkylstyrene) and at least 10 wt%, by weight of the continuous substantially flat sheet, of an alkyl or aryl sulfonamide plasticizer;
   heating, in the presence of a flowing atmosphere comprising oxygen, at least one surface of the continuous substantially flat sheet for at least 30 seconds at a temperature within the range from 60°C to 190 or 185 or 180 or 170 or 160 or 180 or 200 or 220 or 250°C while the continuous elastomeric length is under a tension of from less than 5.0 or 4.0 or 3.0 or 2.0 or 1.0 or 0.5 g/cm·µm;
   drawing off a reaction product that is generated during heating; and
   cooling the continuous sheet to form a heated continuous substantially flat sheet having a level of plasticizer less than the level of plasticizer in the continuous substantially flat sheet.
28. The method of embodiment 27, wherein the sheet is heated by hot air convection.
29. The method of embodiment 27 and 28, wherein the continuous substantially flat sheet is in the form of a roll that is unrolled through an oven so that at least a portion of at least one surface of the sheet is heated for a residence time, the heated portion of the first continuous substantially flat sheet then being conveyed out of the oven to cool and be rolled.
30. A method of making a pneumatic tire comprising the method of embodiments 27-29, and further comprising:
   cutting the heated continuous substantially flat sheet to form a pneumatic innerliner unit, and splicing the pneumatic innerliner unit to itself to form the pneumatic innerliner, wherein a step of removing surface plasticizer is substantially absent.
31. A pneumatic tire comprising a pneumatic innerliner consisting essentially of a dynamically vulcanized alloy of an engineering resin and a functionalized poly(isobutylene-co-alkylstyrene) and from less than 10 or 8 or 6 or 4 or 2 or 1 or 0.5 wt%, by weight of the innerliner, of a alkyl or aryl sulfonamides plasticizer.
32. The pneumatic tire of embodiment 31, wherein the innerliner has an average thickness within the range from 10 or 20 or 40 or 50 µm to 200 or 250 or 300 or 400 or 500 µm.
33. The pneumatic tire of embodiment 31, wherein the engineering resin is Nylon.
34. The pneumatic tire of embodiment 31, wherein the functionalized poly(isobutylene-co-alkylstyrene) is brominated poly(isobutylene-*co-p*-methylstyrene).

Also described herein is the use of a pneumatic innerliner for making a tire, the pneumatic innerliner comprising, or consisting essentially of, a dynamically vulcanized alloy of an engineering resin and a functionalized poly(isobutylene-*co*-alkylstyrene) and from less than 10 or 8 or 6 or 4 or 2 or 1 or 0.5 wt%, by weight of the innerliner, of a alkyl or aryl sulfonamides plasticizer. The components of the innerliner can be further described, including its method of production, as disclosed herein.

Also described herein is the use of a continuous elastomeric length for making a tire, the length comprising, or consisting essentially of, a dynamically vulcanized alloy of an engineering resin and a functionalized poly(isobutylene-*co*-alkylstyrene) and at least 10 wt%, by weight of the length, of a alkyl or aryl sulfonamides plasticizer. The components of the length can be further described, including its subsequent heat treatment and cutting, as disclosed herein.

## Claims

1. A method of preparing a continuous elastomeric sheet for a pneumatic innerliner comprising:
providing a continuous substantially flat sheet with an average thickness within the range from 10 to 500 µm and comprising a dynamically vulcanized alloy of an engineering resin and a functionalized poly(isobutylene-*co*-alkylstyrene) and at least 10 wt%, by weight of the continuous substantially flat sheet, of an alkyl or aryl sulfonamide plasticizer;
heating, in the presence of a flowing atmosphere comprising oxygen, at least one surface of the continuous substantially flat sheet for at least 30 seconds at a temperature within the range from 60°C to 250°C while the continuous elastomeric length is under a tension from less than 5.0 g/cm·µm;
drawing off a reaction product that is generated during heating; and
cooling the continuous sheet to form a heated continuous substantially flat sheet having a level of plasticizer less than the level of plasticizer in the continuous substantially flat sheet.

2. The method of claim 1, wherein the continuous substantially flat sheet is in the form of a roll that is unrolled through an oven so that at least a portion of at least one surface of the sheet is heated for a residence time, the heated portion of the first continuous substantially flat sheet then being conveyed out of the oven to cool and be rolled.

3. A method of making a pneumatic tire comprising the method of claim 1 or 2, and further comprising:
cutting the heated continuous substantially flat sheet to form a pneumatic innerliner unit, and splicing the pneumatic innerliner unit to itself to form the pneumatic innerliner, wherein a step of removing surface plasticizer is substantially absent.

4. The method of claim 3 wherein the continuous elastomeric sheet is not substantially contacted by solvent at any step or at any time in between the steps from making the continuous elastomeric sheet until the tire is formed.

5. The method of any preceding claim wherein the residence time is within the range of from 30 seconds to 30 minutes.

6. The method of any preceding claim wherein the plasticizer is present in the continuous substantially flat sheet at a level of 10 to 30 wt %.

## Patentansprüche

1. Verfahren zur Herstellung einer kontinuierlichen elastomeren Folie zur pneumatischen Innenauskleidung, bei dem
eine kontinuierliche im Wesentlichen flache Folie mit einer durchschnittlichen Schichtdicke innerhalb des Bereiches von 10 bis 500 µm verwendet wird, welche Folie ein dynamisch vulkanisiertes Gemisch von technischem Harz und funktionalisiertem Poly(isobutylen-co-alkylstyrol) und mindestens 10 Gew.-% Alkyl- oder Arylsulfonamid als Weichmacher umfasst, bezogen auf das Gewicht der kontinuierlichen im Wesentlichen flachen Folie,
in Gegenwart einer strömenden Sauerstoff umfassenden Atmosphäre mindestens eine Oberfläche der kontinuierlichen im Wesentlichen flachen Folie für mindestens 30 Sekunden bei einer Temperatur im Bereich von 60 °C bis 250 °C erhitzt wird, während sich die kontinuierliche elastomere Folienbahn unter einer Spannung von weniger als 5.0 g/cm·µm befindet,
ein Reaktionsprodukt, welches während der Erhitzung erzeugt wird, abgezogen wird, und
die kontinuierliche Folie zur Bildung einer erhitzten kontinuierlichen im Wesentlichen flachen Folie, die einen geringeren Anteil an Weichmacher aufweist als der Anteil an Weichmacher in der kontinuierlichen im Wesentlichen flachen Folie, abgekühlt wird.

2. Verfahren nach Anspruch 1, bei dem die kontinuierliche im Wesentlichen flache Folie in Form einer Rolle vorliegt, die durch einen Ofen hindurch entrollt wird, so dass mindestens ein Teil von mindestens einer der Oberflächen der Folie für eine Verweilzeit erhitzt wird, wobei der erhitzte Teil der ersten kontinuierlichen im Wesentlichen flachen Folie dann aus dem Ofen befördert wird, um abzukühlen und aufgerollt zu werden.

3. Verfahren zur Herstellung eines pneumatischen Reifens, das das Verfahren nach Anspruch 1 oder 2 umfasst, bei dem ferner
die erhitzte kontinuierliche im Wesentlichen flache Folie in pneumatische Innenauskleidungselemente zerschnitten wird und die Innenauskleidungselemente mit sich selbst verspleißt werden, um die pneumatischen Innenauskleidungen zu bilden, wobei ein Schritt zur Entfernung von Oberflächenweichmachern im Wesentlichen fehlt.

4. Verfahren nach Anspruch 3, bei dem die kontinuierliche elastomere Folie im Wesentlichen zu keinem Zeitpunkt oder während keines Schrittes zwischen den Schritten des Herstellens der kontinuierlichen elastomeren Folie bis zur Bildung des Reifens mit Lösungsmitteln in Kontakt kommt.

5. Verfahren nach einem der vorhergehenden Ansprüche, bei dem die Verweilzeit innerhalb des Bereiches von 30 Sekunden bis zu 30 Minuten liegt.

6. Verfahren nach einem der vorhergehenden Ansprüche, bei dem der Weichmacher in der kontinuierlichen im Wesentlichen flachen Folie in einem Anteil von 10 bis 30 Gew.-% vorliegt.

## Revendications

1. Procédé de préparation d'une feuille élastomère continue pour un calandrage intérieur de pneu, comprenant :
la mise à disposition d'une feuille continue essentiellement plate d'une épaisseur moyenne dans la plage allant de 10 à 500 µm et comprenant un alliage vulcanisé dynamiquement d'une résine d'ingénierie et d'un poly(isobutylène-co-alkylstyrène) fonctionnalisé et au moins 10 % en poids de la feuille continue essentiellement plate d'un plastifiant sulfonamide d'alkyle ou d'aryle ;
le chauffage, en présence d'une atmosphère en écoulement comprenant de l'oxygène, d'au moins une surface de la feuille continue essentiellement plate pendant au moins 30 secondes à une température dans la plage allant de 60 °C à 250 °C pendant que la longueur élastomère continue est sous une tension de moins de 5,0 g/cm·µm ;
le soutirage d'un produit de réaction qui est généré pendant le chauffage ; et
le refroidissement de la feuille continue pour former une feuille continue essentiellement plate chauffée ayant un niveau de plastifiant inférieur au niveau de plastifiant dans la feuille continue essentiellement plate.

2. Procédé selon la revendication 1, dans lequel la feuille continue essentiellement plate est sous la forme d'un rouleau qui est déroulé dans un four de sorte qu'au moins une partie d'au moins une surface de la feuille soit chauffée pendant un temps de séjour, la partie chauffée de la première feuille continue essentiellement plate étant ensuite transportée hors du four pour refroidir et être enroulée.

3. Procédé de fabrication d'un pneu comprenant le procédé selon la revendication 1 ou 2, et comprenant en outre :
le découpage de la feuille continue essentiellement plate chauffée pour former une unité de calandrage intérieur de pneu, et le raccordement de l'unité de calandrage intérieur de pneu avec elle-même pour former le calandrage intérieur de pneu, une étape d'élimination d'un plastifiant de surface étant essentiellement absente.

4. Procédé selon la revendication 3, dans lequel la feuille élastomère continue n'est essentiellement pas mise en contact avec un solvant à toute étape ou à tout moment entre les étapes de fabrication de la feuille élastomère continue jusqu'à la formation du pneu.

5. Procédé selon l'une quelconque des revendications précédentes, dans lequel le temps de séjour est dans la plage allant de 30 secondes à 30 minutes.

6. Procédé selon l'une quelconque des revendications précédentes, dans lequel le plastifiant est présent dans la feuille continue essentiellement plate à un niveau de 10 à 30 % en poids.
